# EUROPÄISCHE PATENTSCHRIFT

(11) **EP 0 285 977 B1**
(45) Veröffentlichungstag und Bekanntmachung des Hinweises auf die Patenterteilung: **20.01.1993**
(21) Anmeldenummer: 88105041.3
(22) Anmeldetag: 29.03.1988
(51) Int. Cl.: C09C 1/00

(54) **Perlglanzpigmentzubereitungen**
Nacreous pigment preparations
Préparations contenant des pigments nacrés

(30) Priorität: 10.04.1987 DE 3712289
(43) Veröffentlichungstag der Anmeldung: 12.10.1988
(73) Patentinhaber: MERCK PATENT GmbH, D-64271 Darmstadt (DE)
(72) Erfinder: Kieser, Manfred, Dr., D-6100 Darmstadt 21 (DE)

(56) Entgegenhaltungen:
- EP-A- 0 090 259
- US-A- 4 205 997

## Beschreibung

Die Erfindung betrifft plättchenförmige Perlglanzpigmentzubereitungen mit verbesserter Rieselfähigkeit.

Die Verbesserung der Rieselfähigkeit bzw. des Fließverhaltens von pulverförmigen Substanzen aller Art ist Gegenstand vieler Untersuchungen und Bemühungen. Da das Fließverhalten von den individuellen physikalischen Eigenschaften der Pulver bestimmt wird, wie z.B. der Hygroskopizität, der Form und Größenverteilung der Pulverteilchen, dem elektrostatischen Aufladevermögen und der Adhäsion der Teilchen untereinander, sind oft sehr individuelle Lösungen für spezielle Probleme vorgeschlagen worden.

Ein übliches und breit anwendbares Mittel zur Verbesserung der Rieselfähigkeit von Pulvern ist der Zusatz von pyrogener Kieselsäure, also einer hoch dispersen Kieselsäure mit einer Teilchengröße von etwa 10 nm. Der Versuch, die Kieselfähigkeit von plättchenförmigen Perlglanzpigmenten durch Zusatz dieses Hilfsmittels zu verbessern, scheiterte jedoch. Bei zahlreichen Anwendungen werden jedoch plättchenförmige Perlglanzpigmente in trockener Pulverform eingesetzt und die ausgeprägte Neigung dieser Pigmente zur Bildung von Agglomeraten führt dabei zu erheblichen Problemen. So wird beispielsweise in der DE-A1 33 21 953 eine aufwendige apparative Umgestaltung von Bronziermaschinen vorgeschlagen, um auch Perlglanzpigmente in Bronzierverfahren einsetzen zu können.

Es bestand daher die Aufgabe, pulverförmige Perlglanzpigmente so zu modifizieren, daß sie eine verbesserte Rieselfähigkeit aufweisen und damit in Trichtern, auf Walzen und ähnlichen Geräten nicht mehr zur Verstopfung und Agglomeratbildung neigen.

Diese Aufgabe wurde durch die vorliegende Erfindung gelöst. Es wurde nämlich gefunden, daß durch eine Beschichtung der Pigmente mit freien Monocarbonsäuren oder Cyclohexanonkondensatharzen eine drastische Verbesserung des Fließverhaltens bzw. der Rieselfähigkeit erzielt wird.

Gegenstand der Erfindung sind daher pulverförmige Perlglanzpigmentzubereitungen mit verbesserter Rieselfähigkeit, die dadurch gekennzeichnet sind, daß die Pigmente mit 0,2-20 Gew.-% einer gesättigten freien Monocarbonsäure mit 10-26 C-Atomen oder eines Cyclohexanonkondensatharzes überzogen sind.

Gegenstand der Erfindung ist auch ein Verfahren zur Herstellung von pulverförmigen Perlglanzpigmentzubereitungen mit verbesserter Rieselfähigkeit, das dadurch gekennzeichnet ist, daß ein plättchenförmiges Pigment mit einer Schmelze einer gesättigten freien Monocarbonsäure mit 10-26 C-Atomen oder eines Cyclohexanonkondensatharzes oder einer Lösung dieser Stoffe in einem organischen Lösungsmittel benetzt und durch Abdunsten des Lösungsmittels oder durch Abkühlen getrocknet wird.

Die Aufbringung eines gegebenenfalls silikathaltigen Chrom- oder Aluminiumumsalzes einer Carbonsäure auf die Oberfläche eines Perlglanzpigmentes ist in EP 0,090,259 beschrieben. Dadurch wird eine hydrophobe Oberfläche erhalten, wodurch die Einarbeitung der Perlglanzpigmente in organische Formulierungen wie z.B. Lacke oder Kunststoffe erleichtert wird.

Im Unterschied dazu sind die erfindungsgemäßen Pigmente mit einer freien gesättigten Monocarbonsäure mit 10-26 C-Atomen oder einem Cyclohexanonkondensatharz überzogen, wodurch eine stark verbesserte Rieselfähigkeit der entsprechenden pulverförmigen Perlglanzpigmentzubereitungen erzielt wird.

Als Ausgangsmaterial für die erfindungsgemäß beschichteten Perlglanzpigmentzubereitungen können alle üblichen Perglanzpigmente verwendet werden, wie z.B. Wismutoxychlorid, mit Wismutoxychlorid beschichteter Glimmer oder plättchenförmige Metalloxide, insbesondere plättchenförmige Eisenoxide. Besonders bevorzugt werden jedoch Perlglanzpigmente auf Basis von mit Metalloxiden, insbesondere Titandioxid und/oder Eisenoxid, beschichteten Glimmerschuppen eingesetzt. Alle diese Pigmente sind bekannt und sind sowohl nach bekannten Methoden herstellbar als auch im Handel erhältlich, z.B. unter dem Warenzeichen Iriodin von der Firma E. Merck, Darmstadt. Eine Beschreibung dieser Pigmente und einiger Herstellverfahren findet sich beispielsweise in den deutschen Patentschriften 14 67 468, 19 59 998, 20 09 566, 22 14 545 und 25 22 572, den europäiscnen Patentschriften 14 382 und 68 311 und dem US-Patent 4,373,963.

Zur Beschichtung dieser Pigmente werden gesättigte freie Monocarbonsäuren einer Kettenlänge von 10-26 C-Atomen oder Cyclohexanonkondensatharze eingesetzt. Eine Menge von etwa 0,2-20 Gew.-%, bezogen auf das Pigmentgewicht, hat sich als brauchbar herausgestellt, wobei Mengen von etwa 0,5-10 % und insbesondere etwa 1-5 % bevorzugt sind. Als Carbonsäuren werden bevorzugt solche mit 12 bis 18 C-Atomen eingesetzt. Neben oder anstelle der freien Säure können auch Salze eingesetzt werden, wobei insbesondere die Alkali- und Ammoniumsalze bevorzugt sind.

Unter dem Begriff Cyclohexanonkondensatharze sind Polymere zu verstehen auf Basis von Cyclohexanon, die in der Regel einen Erweichungsbereich von etwa 65 bis etwa 95 °C, insbesondere von etwa 75 bis 85 °C, aufweisen.

Die Beschichtungsmittel können sowohl in Form einer Schmelze als auch in Form einer Lösung eingesetzt werden. Als Lösungsmittel werden dabei bevorzugt leicht flüchtige organische Lösungsmittel verwendet, die nach dem Benetzen der Pigmentoberfläche leicht durch Abdunsten entfernt werden können. Insbesondere werden Lösungsmittel mit einem Siedebereich von etwa 40 bis 80 °C, wie z.B. Dichlormethan, Methanol, Aceton, Ethylacetat oder Ethanol eingesetzt.

Die Beschichtung selbst geschieht durch einfaches Mischen der Komponenten. So kann z.B. das Pigment in einem Trommel-, Konus- oder Taumelmischer vorgelegt werden und mit der Schmelze oder der Lösung des Beschichtungsmittels gemischt werden. Falls das Beschichtungsmittel in Form einer Lösung eingesetzt wird, kann auch das Pigment in dieser Lösung dispergiert werden und das Lösungsmittel abgedunstet bzw. abdestillilert werden. Auch eine Sprühtrocknung einer solchen Suspension ist geeignet.

Nach Entfernung des Lösungsmittels bzw. nach Erkalten des als Schmelze aufgebrachten Beschichtungsmittels liegt die Pigmentzubereitung als frei fließendes Pulver vor, das gut verarbeitet werden kann. Die Verbesserung der Rieselfähigkeit kann sehr einfach durch Messung der Schüttkegelhöhe ermittelt werden. Dazu wird das Pigmentpulver durch ein Metallsieb auf einen massiven Metallzylinder aufgestreut, wobei sich auf dem Metallzylinder ein Schüttkegel aufbaut. Je schlechter die Fließeigenschaften des Pulvers sind, desto steiler ist die Flanke dieses Kegels und desto höher und spitzer ist der Schüttkegel. Bei einer Vermessung der erfindungsgemäßen Pigmentzubereitungen wird festgestellt, daß die Schüttkegelhöhe gegenüber den unbehandelten Pigmenten deutlich verringert ist.

Die stark verringerte Tendenz zur Bildung von Agglomeraten, die sonst insbesondere bei den feinteiligen Pigmenten zu beobachten ist, zeigt sich auch in einem verstärkten Stauben der Pigmentzubereitungen. Durch Befeuchten der Zubereitungen mit einem schwer flüchtigen organischen Lösungsmittel, insbesondere einem üblicherweise in der Kunststoffindustrie eingesetzten Weichmacher, kann dies jedoch unterbunden werden. Für Anwendungen, bei denen ein verstärktes Stauben stören würde, werden die Pigmentzubereitungen daher zusätzlich mit etwa 0,5-7 Gew.-%, insbesondere etwa 1-4 Gew.-%, eines solchen Mittels befeuchtet.

Als solche Lösungsmittel kommen beispielsweise Phthalsäureester mit linearen, verzweigten oder auch cyclischen Alkoholen mit bis zu 12 C-Atomen, wie z.B. Dioctylphthalat (Di-2-ethyl-hexylphthalat), Diisononylphthalat, Diisodecylphthalat, Dibutylphthalat, Diisobutylphthalat und Dicyclohexylphthalat, aliphatische Dicarbonsäureester, wie z.B. Ester der Adipin-, Sebacin- oder der Acelainsäure, Fettsäureester, Citronensäureester und andere Weichmacher, wie sie z.B. in Kirk-Othmer, Band 15, Seite 720-789, genannt sind, in Frage. Bevorzugt werden Phthalsäureester und insbesondere Dioctylphthalat verwendet. Es können auch Mischungen verschiedener Weichmacher eingesetzt werden.

Diese Lösungsmittel können analog dem Beschichtungsmittel durch einfaches Mischen oder Besprühen aufgebracht werden. Dies kann gemeinsam mit dem Beschichtungsmittel erfolgen oder aber nach dem Beschichten.

Die so erhaltenen Perlglanzpigmentzubereitungen können für alle üblichen Zwecke eingesetzt werden, insbesondere jedoch dort, wo es bei der Verarbeitung auf eine gute Rieselfähigkeit ankommt.

### Beispiel 1

In eine Lösung von 1 g Stearinsäure in 100 ml Dichlormethan werden 50 g eines mit Titandioxid beschichteten Glimmerpigments mit einer Teilchengrößenverteilung von 10-60 µm eingerührt und das Lösungsmittel wird abgezogen. Man erhält eine gute rieselfähige, stark staubende Pigmentzubereitung.

### Beispiel 2

Man arbeitet wie in Beispiel 1, setzt jedoch eine Lösung von 2,5 g Stearinsäure in 100 ml Dichlormethan ein.

### Beispiel 3

Man arbeitet wie in Beispiel 1, setzt jedoch eine Lösung von 1 g Myristinsäure in 100 ml Dichlormethan ein.

### Beispiel 4

Man arbeitet wie in Beispiel 1, setzt jedoch 1 g Ketonharz (Carbigen K 90) in 100 ml Dichlormethan ein.

### Beispiel 5

Man arbeitet wie in Beispiel 3, setzt jedoch der Dichlormethanlösung noch 1 g Dibutylphthalat zu. Man erhält eine gute rieselfähige, wenig staubende Perlglanzpigmentzubereitung.

### Beispiel 6

Die nach Beispiel 3 erhaltene trockene Perlglanzpigmentzubereitung wird unter intensivem Rühren mit 1 g Dibutylphthalat befeuchtet. Man erhält eine gut rieselfähige, wenig staubende Perlglanzpigmentzubereitung.

### Beispiel 7

50 g des in Beispiel 1 eingesetzten Perlglanzpigments werden unter Rühren auf etwa 80 °C erwärmt und mit 0,75 g Myristinsäure von 80 °C vermischt. Nach Abkühlen auf Raumtemperatur erhält man eine gut rieselfähige, stark staubende Perlglanzpigmentzubereitung.

### Beispiel 8

Es wird analog Beispiel 1 gearbeitet, jedoch ein mit Titandioxid beschichtetes Glimmerpigment einer Teilchengrößenverteilung von 5-25 µm eingesetzt.

### Beispiel 9

In eine Lösung von 1 g Laurinsäure in 100 ml Dichlormethan werden 50 g eines mit Fe₂O₃ beschichteten Glimmerpigments einer Teilchengrößenverteilung von 10-60 µm eingerührt und das Lösungsmittel abgezogen. Man erhält eine gut rieselfähige, stark staubende Pigmentzubereitung.

### Beispiel 10

Man verfährt analog Beispiel 9, setzt jedoch anstelle von Laurinsäure eine Mischung von 0,5 g Myristinsäure und 0,5 g Laurinsäure ein.

### Beispiel 11

Analog Beispiel 1 werden 100 g eines nach dem Verfahren der US-PS 4,373,963 hergestellten plättchenförmigen Eisenoxids mit 2 g Laurinsäure beschichtet.

### Beispiel 12

In einem Schaufelmischer werden 10 kg eines mit Eisenoxid und Titanoxid beschichteten Glimmerpigments auf 80 °C erwärmt und mit 200 g geschmolzener Myristinsäure versetzt und etwa 30 Minuten gemischt. Man erhält eine stark staubende, gut rieselfähige Perlglanzpigmentzubereitung.

## Patentansprüche

1. Pulverförmige Perlglanzpigmentzubereitungen mit verbesserter Rieselfähigkeit, dadurch gekennzeichnet, daß die Pigmente mit 0,2-20 Gew.-% einer gesättigten freien Monocarbonsäure mit 10-26 C-Atomen oder eines Cyclohexanonkondensatharzes überzogen sind.

2. Pigmentzubereitungen nach Anspruch 1, dadurch gekennzeichnet, daß der Überzug zusätzlich 0,5-7 Gew.-%, bezogen auf das Pigmentgewicht, eines üblicherweise als Weichmacher eingesetzten organischen Lösungsmittels enthält.

3. Verfahren zur Herstellung von pulverförmigen Perglanzpigmentzubereitungen mit verbesserter Rieselfähigkeit, dadurch gekennzeichnet, daß ein plättchenförmiges Perlglanzpigment mit einer Schmelze einer gesättigten freien Monocarbonsäure mit 10-26 C-Atomen oder eines Cyclohexanonkondensatharzes oder einer Lösung dieser Stoffe in einem organischen Lösungsmittel benetzt und durch Abdunsten des Lösungsmittels oder durch Abkühlen getrocknet wird.

4. Verfahren nach Anspruch 3, dadurch gekennzeichnet, daß das Pigment gleichzeitig mit oder nach dieser Behandlung mit einem üblicherweise als Weichmacher für Kunststoffe eingesetzten schwer flüchtigen organischen Lösungsmittel befeuchtet wird.

## Claims

1. Pulverulent pearlescent pigment preparations of improved flowability, characterised in that the pigments have been coated with 0.2-20% by weight of a saturated free monocarboxylic acid having 10-26 C atoms or of a cyclohexanone condensate resin.

2. Pigment preparations according to Claim 1, characterised in that the coating additionally contains 0.5-7% by weight, relative to the weight of pigment, of an organic solvent customarily employed as a plasticiser.

3. Process for the preparation of pulverulent pearlescent pigment preparations of improved flowability, characterised in that a platelet-like pearlescent pigment is wetted with a melt of a saturated free monocarboxylic acid having 10-26 C atoms, or of a cyclohexanone condensate resin, or with a solution of these substances in an organic solvent, and is dried by evaporating off the solvent or by cooling.

4. Process according to Claim 3, characterised in that, at the same time as, or after, this treatment, the pigment is moistened with a sparingly volatile organic solvent which is customarily employed as a plasticiser for plastics.

## Revendications

1. Préparations contenant des pigments nacrés pulvérulents, ayant une faculté d'écoulement améliorée, caractérisées en ce que les pigments sonts revêtus avec 0,2-20% en poids d'un acide monocarboxylique libre saturé ayant 10-26 atomes de carbone ou d'une résine de condensat de cyclohexanone.

2. Préparations contenant des pigments selon la revendication 1, caractérisées en ce que le revêtement contient en outre 0,5-7% en poids, par rapport au poids de pigment, d'un solvant organique classiquement employé comme plastifiant.

3. Procédé pour la production de préparations pulvérulentes contenant des pigments nacrés ayant une faculté d'écoulement améliorée, caractérisé en ce qu'un pigment nacré en plaquettes est imprégné avec une masse fondue d'un acide monocarboxylique libre saturé ayant 10-26 atomes de carbone ou d'une résine de condensat de cyclohexanone ou une solution de ces substances dans un solvant organique et qu'on sèche par évaporation du solvant ou par réfrigération.

4. Procédé selon la revendication 3, caractérisé en ce que le pigment est imprégné en même temps que ou après ce traitement avec un solvant organique difficilement volatil classiquement utilisé comme plastifiant pour matières plastiques.
